Europäisches Patentamt

(19) European Patent Office

Office européen des brevets

(11) Numéro de publication: **0 005 102**
**B1**

(12) **FASCICULE DE BREVET EUROPEEN**

(45) Date de publication du fascicule du brevet: **06.01.82**

(51) Int. Cl.³: **B 21 B 37/06,** G 01 B 7/34

(21) Numéro de dépôt: **79400227.9**

(22) Date de dépôt: **06.04.79**

(54) Dispositif pour contrôler la planéité d'une bande métallique laminée à froid.

(30) Priorité: **13.04.78 FR 7810906**

(43) Date de publication de la demande:
**31.10.79 Bulletin 79/22**

(45) Mention de la délivrance du brevet:
**06.01.82 Bulletin 82/1**

(84) Etats contractants désignés:
**DE GB NL**

(56) Documents cités:
**DE - A - 1 602 095**
**FR - A - 1 485 357**
**FR - A - 1 597 078**
**FR - A - 2 015 593**
**FR - A - 2 041 480**
**FR - A - 1 548 419**
**FR - A - 2 119 699**
**FR - A - 2 357 876**
**FR - A - 2 359 394**
**US - A - 3 475 935**

(73) Titulaire: **UNION SIDERURGIQUE DU NORD ET DE L'EST DE LA FRANCE par abréviation "USINOR" Société anonyme:**
**14, Rue d'Athènes**
**F-75426 Paris, Cedex 09 (FR)**

(72) Inventeur: **Cabaret, Pierre M.**
**100 Avenue Paul Doumer**
**F-75007 Paris (FR)**
Inventeur: **Daboust, Maurice B.**
**A. Chacara Husault**
**F-37270 Montlouis S/Loire (FR)**
Inventeur: **Engerran, Pierre R.**
**54 Rue Henri Pauquet**
**F-60100 Creil (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

### Dispositif pour contrôler la planéité d'une bande
### métallique laminée à froid

Au cours du laminage à froid en continu d'une bande métallique, le métal est soumis à des tractions plus ou moins fortes suivant la nature du métal et la réduction d'épaisseur souhaitée.

S'il existe des différences de traction dans la largeur de la bande au cours du laminage, et que celles-ci atteignent des valeurs élevées, des défauts de planéité apparaissent sur la bande en traction et l'opérateur agit alors sur les différents moyens à sa disposition pour y remédier, par exemple en modifiant le bombé des cylindres du laminoir, soit par action sur l'organe de serrage, soit par déformation hydraulique des cylindres, ou encore par une modification locale du diamètre des cylindres obtenue essentiellement par un arrosage en des endroits précis, qui par refroidissement provoque une contraction.

Il est préférable de pouvoir prévenir ces défauts, afin de réagir avant qu'ils n'apparaissent. C'est la raison pour laquelle on a déjà proposé de détecter les différences de traction pouvant exister dans une section de la bande, avant que celles-ci ne prennent une ampleur telle que le défaut devienne visible sur la bande en traction, ce qui donne comme avantage complémentaire la possibilité pour l'opérateur d'assurer un bon guidage de la bande dans le laminoir, celle-ci ayant tendance à se déporter si les rives manquent de traction ou si cette traction est inégalement répartie.

Le brevet FR—A—2 041 480 se rapporte à un dispositif pour contrôler dans un laminoir travaillant à froid la planéité d'une bande métallique, par mesure des tractions dans des zones différentes sur la largeur de la bande au moyen de plusieurs rouleaux de poussée coaxiaux disposés transversalement à la direction d'avance de la bande et sur un seularbre, et munis de dispositifs de mesure des efforts exercés par la bande sur chacun desdits rouleaux, qui sont au moins au nombre de trois et sont accouplés entre eux par une denture circulaire de façon que ces rouleaux soient placés jointivement, ou à peu près jointivement, de sorte que la somme des efforts mesurés par les rouleaux respectifs peut être considérée comme représentative de la traction totale exercée sur la bande. A chaque rouleau de poussée sont asociés deux capteurs d'effort.

Le brevet FR—A—1 485 357, qui concerne également un dispositif pour contrôler dans un laminoir travaillant à froid la planéité d'une bande métallique par mesure de la répartition des tractions sur la largeur de la bande, indique que les joints entre les rouleaux de poussée, qui sont au moins au nombre de trois et sont également disposés sur un arbre, sont aussi petits que possible afin que la surface extérieure du cylindre soit aussi lisse que possible.

Dans FR—A—2 015 593 des dispositifs de mesure de traction sont répartis sur la largeur d'une bande métallique en cours de laminage et les efforts mesurés sont comparés avec la valeur obtenue en divisant l'effort de traction total par le nombre de points de mesure, les écarts éventuellement constatés étant alors exploités pour supprimer les défauts de planéité.

Les dispositifs de mesure de tractioce sout aussi constitués par des rouleaux de poussée coaxiaux. Cependant, chaque rouleau est ici supporté par plusieurs arbres dont leurs axes sont alignés.

L'invention a pour but de créer un autre dispositif-support pour des rouleaux de poussée dans un dispositif conforme au préambule de la revendication 1, qui permet d'arranger les rouleaux l'un à côté de l'autre d'une manière jointive et de mesurer effectivement la répartition des tractions dans la bande.

A cet effet le dispositif suivant l'invention est caractérisé en cen que le rouleau central tourillonne sur un élément d'arbre qui s'étend à travers des rouleaux latéraux et dont les extrémités respectives sont, au-delà de ces derniers, montées dans deux supports, qui s'appuient chacun par l'intermédiaire d'un capteur d'effort sur une poutre solidaire du bâti du laminoir, et en ce que les rouleaux latéraux sont portés par un élément d'arbre autour duquel ils sont montés à rotation libre, qui traverse les supports du rouleau central, et dont les extrémités respectives sont, au-delà de ces derniers, montées dans deux supports qui s'appuient chacun, par l'intermédiaire d'un capteur d'effort, sur la poutre.

Chaque élément d'arbre peut être constitué de deux secteurs de 90° diamétralement opposés, les deux éléments d'arbre étant disposés en croix l'un par rapport à l'autre, de manière à assurer l'indépendance des deux éléments. Il est également possible de réaliser sous forme tubulaire l'un des éléments d'arbre pour supporter à rotation le rouleau central et de constituer l'autre par une barre pleine traversant coaxialement de part en part l'élément tubulaire et solidarisée avec deux manchons tubulaires pour supporter à rotation les deux rouleaux de rive.

Toujours dans l'hypothèse où il y a trois rouleaux de poussée et moyennant l'utilisation de six capteurs d'effort, on peut aussi, suivant l'invention, prévoir pour chacun des rouleaux un arbre indépendant tourillonnant dans deux paliers qui s'appuient chacun, par l'intermédiaire d'un capteur d'effort, sur la poutre-support, les paliers supportant les extrémités adjacentes du rouleau central et du rouleau latéral correspondant étant imbriqués l'un dans l'autre pour réduire au minimum l'intervalle séparant les faces terminales des rouleaux.

L'invention sera explicitée au cours de la description qui va suivre, en se référant au dessin annexé, dans lequel:

— la fig. 1 est une vue transversale illustrant très schématiquement le mode de mesure des différences de traction dans la largeur de la bande, qui est à la base de l'invention;

— la fig. 2 est une vue en coupe longitudinale d'une partie d'un laminoir comportant un dispositif suivant l'invention;

— la fig. 3 est une vue en coupe transversale d'un mode d'exécution du dispositif comportant deux éléments d'arbre partiellement assemblés en croix et deux paires de capteurs d'effort;

— les fig. 4, 5, 6 et 7 sont des vues en coupe suivant les lignes 4—4, 5—5, 6—6, 7—7 de la figure 3;

— la fig. 8 est une vue en perspective montrant le détail de montage des deux éléments d'arbre;

— la fig. 9 est une vue en coupe transversale d'un mode d'exécution du dispositif comportant deux éléments d'arbre, dont l'un est tubulaire et l'autre est une barre traversant le précédent;

— la fig. 10 est une vue partielle, en coupe transversale, d'un mode d'exécution du dispositif comprenant trois arbres indépendants pour les rouleaux respectifs;

— les fig. 11 et 12 sont des vues en perspective montrant la constitution de deux paliers adjacents supportant chacun l'extrémité d'un arbre de rouleau.

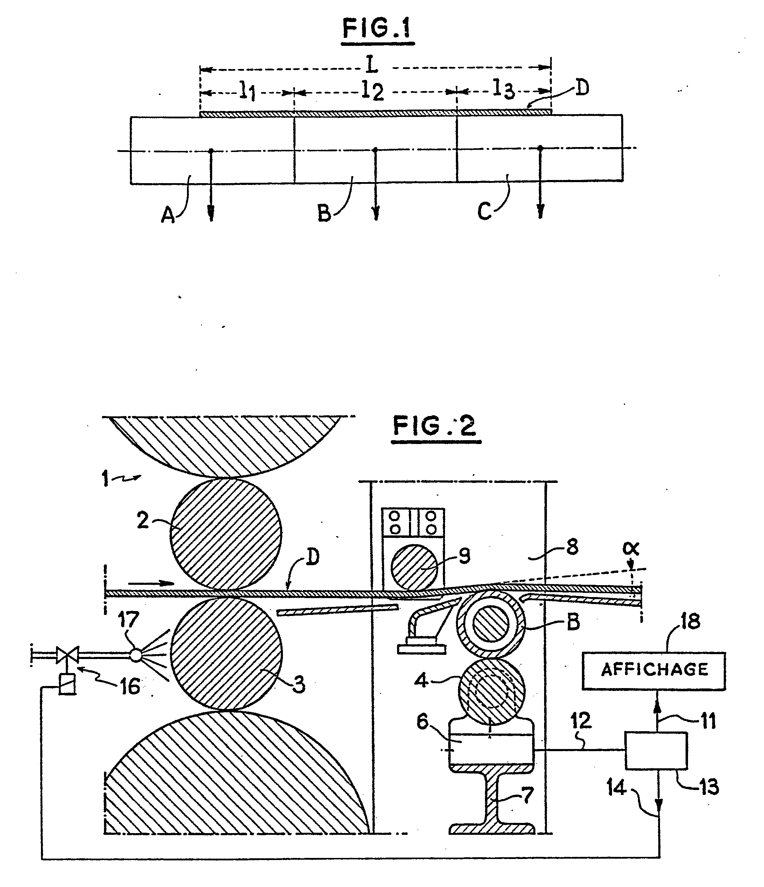

Sur le schéma de la figure 1 sont représentés trois rouleaux A, B et C sur lesquels passe une bande D, de largeur L, soumise à un laminage à froid. La longueur $l_2$ du rouleau central B est calculée de façon qu'en toute circonstance il soit entièrement recouvert par la bande la plus étroite, susceptible d'être traitée dans le laminoir. A un instant déterminé, la bande de largeur réelle L déborde de la largeur $l_1$ sur le rouleau A et de la largeur $l_3$ sur le rouleau C.

La traction exercée sur la bande, du fait que cette dernière a avec les rouleaux un contact plus que tangentiel, applique sur chacun des rouleaux un effort vertical. Si la traction est uniformément répartie sur la largeur de la bande, l'effort appliqué à chaque rouleau est proportionnel à la largeur de la bande qu'il supporte. Il est donc facile de calculer, à partir de la mesure de la somme des efforts exercés sur les trois rouleaux, la répartition idéale, ou thérorique, qui correspond à une traction uniformément répartie dans la bande.

Dans la pratique, puisqu'il y a proportionnalité entre l'effort mesuré et la traction qui provoque cet effort, les appareils de mesure peuvent être directement gradués en unités de traction, et on calcule les tractions théoriques à l'aide des formules suivantes:

$$T_A = \frac{\text{Traction totale} \times l_1}{L}$$

$$T_B = \frac{\text{Traction totale} \times l_2}{L}$$

$$T_C = \frac{\text{Traction totale} \times l_3}{L}$$

dans lesquelles la traction totale est la somme $T'_A + T'_B + T'_C$ des tractions réelles correspondant aux efforts enregistrés sous les rouleaux respectifs.

Si on a, par exemple:
$$R'_A < T_A$$
$$T'_B > T_B$$
$$T'_C < T_C$$

on en conclut immédiatement que la traction réelle en A et en C est trop faible et que les zones de rive sont "longues", et qu'au contraire la traction en B est trop forte et que la zone centrale est "courte".

A la figure 2 est représentee en coupe longitudinale une partie d'un laminoir traviallant à froid, comportant un train de cylindres 1 comprenant deux cylindres 2, 3 entre lesquels passe la bande D qui, à la suite du train 1, traverse un dispositif de contrôle suivant l'invention. Ce dispositif comporte trois rouleaux de poussée, qui exercent chacun, comme représenté pour le rouleau central B, par l'intermédiaire d'un rouleau d'appui 4, une poussée à peu près verticale sur un capteur d'effort 6 porté par une poutre transversale 7 solidarisée avec des colonnes 8 du laminoir.

L'effort à peu près vertical exercé par le rouleau B sur le rouleau d'appui 4 est dû au fait que la bande D est, entre les colonnes 8, appuyée par sa face supérieure contre un rouleau auxiliaire 9 et que les rouleaux A, B, C ont une génératrice supérieure à un niveau situé audessus du plan tangent commun au cylindre 2 et au rouleau 9, de sorte que la bande D s'inscrit sur les rouleaux A, B, C sur un arc de circonférence présentant une certaine amplitude.

Les mesures effectuées par les capteurs d'effort 6 peuvent être exploitées selon des modalités diverses, par exemple comme représenté très schématiquement, au moyen d'un conducteur 12 transmettant des signaux électriques émis par le capteur 6 et appliqués à un calculateur 13 comportant une sortie 11 alimentant un dispositif d'affichage 18 et un conducteur de sortie 14 relié à une électrovanne 16 qui commande deux rampes permettant de projeter un liquide d'arrosage sur la périphérie des cylindres 2,3 du train 1 pour réduire localement le diamètre des cylindres de manière à corriger les écarts éventuellement constatés entre les tractions mesurées par le capteur 6 et la traction théorique calculée par l'appareil 13. Seule la rampe 17 associée au cylindre inférieur 3 a été représentée.

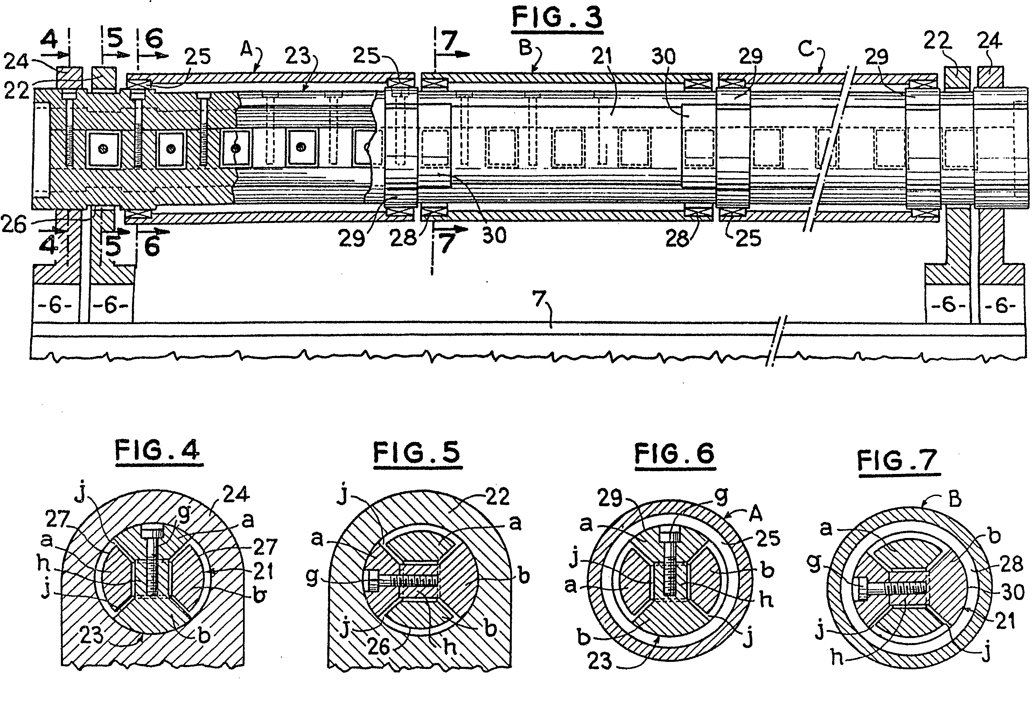

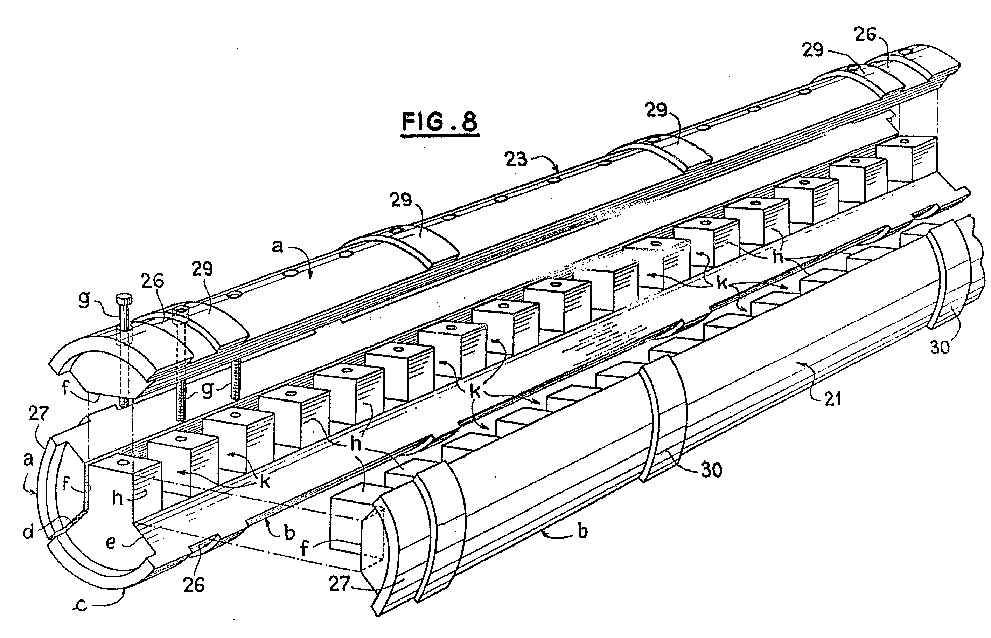

Dans le mode d'exécution de la figure 3 le rouleau central B est supporté par un élément d'arbre 21 qui traverse les rouleaux de rive A et C et repose, par ses extrémités, sur deux supports 22 qui reposent chacun sur la poutre 7 par l'intermédiaire d'un capteur d'effort 6. Les rouleaux de rive A et C sont eux-mêmes portés par un élément d'arbre 23, indépendant de l'élément d'arbre 21, dont les extrémités respectives, après avoir traversé les supports 22 correspondants, sont portées par deux supports 24 qui reposent chacun, par l'intermédiaire d'un capteur 6, sur la poutre 7. L'élément d'arbre 21 et l'élément d'arbre 23 se composent chacun de deux pièces cylindropismatiques a et b, ayant en section droite la forme approximative d'un trapèze isocèle dont la grande base c (Fig. 8) est circulaire, et dont les côtés adjacents d, e à cette grande base font entre eux un angle de 90°, ces deux pièces étant assemblées au moyen de vis g traversant radialement l'une des pièces a et vissées dans des dés h, espacés le long de l'axe de l'élément, qui prolongent l'autre pièce b à partir de la petite base f de sa section et sont appliqués au contact de la face de la pièce a correspondant à la petite base f de sa section. A l'intérieur des rouleaux A, B, C, les deux éléments d'arbre 21, 23 sont disposés en croix l'un par rapport à l'autre, les dés h de l'un des éléments d'arbre traversant les intervalles k qui séparent les dés de l'autre élément. Les deux éléments d'arbre 21, 23 sont en outre espacés circonférentiellement et radialement en ménageant des jeux j (fig. 4 à 7).

Au droit de chaque support 22 ou 24 recevant l'extrémité d'un élément d'arbre 21 ou 23, l'extrémité de l'autre élément d'arbre comporte une rainure périphérique 26 ou 27 aui assure une portée indépendante pour les éléments d'arbre respectifs.

Comme on le voit particulièrement sur les figures 6 et 7, chaque rouleau A, B ou C tourillonne sur l'élément d'arbre qui lui est associé, au moyen de roulements à billes 25 ou 28, qui sont montés chacun sur une portée 29 ou 30 de l'arbre correspondant dont le diamètre est plus grand que la partie intermédiaire de l'arbre, de sorte que chaque roulement associé à un élément d'arbre est libre de tout appul sur deux arcs de 90° diamétralement opposés, correspondant à l'autre élément d'arbre.

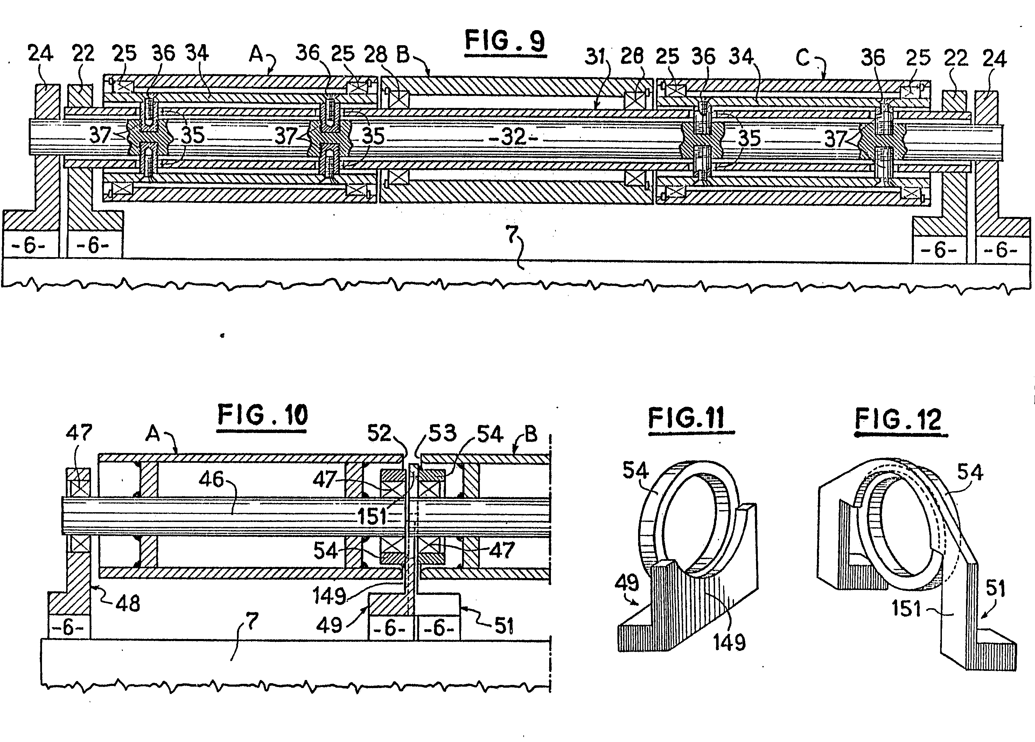

Dans le mode d'exécution suivant la figure 9, deux éléments d'arbre 31, 32 sont également prévus pour supporter respectivement le rouleau central B et les rouleaux de rive A et C. L'élément d'arbre 31 se présente sous la forme d'un tube traversant les rouleaux de rive A, C et dont les extrémités sont portées par des supports 22, l'élément d'arbre 32 associé aux rouleaux de rive étant formé par une barre pleine, coaxiale et intérieure au tube 31, et dont les extrémités sont portées par des supports 24. Comme dans l'exemple de la figure 3, les supports 22, 24 de la figure 9 reposent sur la poutre 7 par l'intermédiaire de capteurs 6. Le rouleau central tourillonne directement sur le tube au moyen de roulements 28, les rouleaux de rive A et C tourillonnant chacun, également par l'intermédiaire de roulements 25, sur un manchon tubulaire 34 extérieur et coaxial à l'élément tubulaire 31 et fixé dans la barre interne 32 au moyen de vis 36 vissées dans des douilles taraudées correspondantes 37, qui traversent avec jeu des ouvertures 35 de la paroi latérale du tube 31.

Dans l'exemple de la figure 10, chaque rouleau A, B, C est porté par un arbre indépendant 46 dont les extrémités tourillonnent dans un roulement 47 qui fait partie d'un palier 48, 49, 51 reposant sur la poutre-support 7, par l'intermédiaire d'un capteur d'effort 6. Pour que le jeu entre les faces adjacentes 52, 53 des rouleaux A et B, ou B et C, soit minimal et qu'ainsi la bande D soit supportée pratiquement de façon continue sur toute sa largeur, les paliers 49 et 51 correspondants (fig. 11 et 12) ont une construction particulière, chacun d'eux comprenant une monture 149 ou 151 à laquelle est soudée, par sa face terminale, la cage de roulement externe sur une fraction seulement de sa hauteur. Les deux montures 149, 151 s'imbriquent l'une dans l'autre grâce au fait que la monture 149, en forme de berceau, est rentrée à l'intérieur de l'ouverture de la monture 151 qui forme un portique dont la partie supérieure supporte la cage externe de roulement 54 correspondante.

Comme on le voit à la figure 10, les deux roulements sont eux-mêmes rentrés à l'intérieur des extrémités des rouleaux A et B, ou B et C.

On remarquera que seul le mode d'exécution de la figure 10, comportant trois arbres indépendants pour les rouleaux respectifs, permet une mesure rigoureuse de la traction exercée sur chaque fraction de la largeur de la bande. En effet, dans le case des figures 3 et 9, si la charge totale appliquée sur les deux rouleaux latéraux A et C peut être mesurée, la charge appliquée sur chacun de ces rouleaux n'est pas connue avec précision puisque la charge appliquée sur un seul de ces rouleaux est partiellement retransmise au capteur opposé.

Dans tous ces cas l'imprécision dans les mesures est, le plus souvent, suffisamment faible pour que le fonctionnement correct du dispositif ne soit pas perturbé.

Dans l'hypothèse où l'affichage 18 (fig. 2) serait le seul résultat de l'exploitation des mesures des différents capteurs 6, et fournirait alors des indications à l'opérateur pour lui permettre de corriger les écarts éventuellement constatés, ces indications pourraient être données selon l'une ou l'autre des modalités suivantes:

— Par trois indicateurs à zéro central, à savoir un pour chaque zone. Lorsque les tractions sont correctes dans les trois zones, les trois aiguilles pointent au zéro. En case de variation, l'aiguille dévie à gauche ou à droite suivant que la valeur mesurée est inférieure ou supérieure à la valeur théorique. Cette disposition sousentend que la bande est parfaitement centrée dans l'axe du laminoir.

— Par deux indicateurs à zéro central, le premier pour la zone centrale, le second pour les zones latérales. La somme des tractions des deux zones latérales conserve dans ce cas sa valeur indicative, même si la bande n'est pas parfaitement dans l'axe du laminoir. L'opérateur n'a plus alors à sa disposition que deux indications: "zone centrale longue" ou "zones de rive longues" (la gauche, la droite, ou les deux).

— Par un seul indicateur à zéro central. Lorsque la répartition des tractions entre la zone centrale et les deux zones de rive est conforme à la répartition théorique, l'aiguille pointe au zéro. La déviation à gauche ou à droite indique alors conventionnellement une zone centrale longue ou des zones de rive longues.

La grandeur représentative de la déviation de l'aiguille, ou de chaque aiguille, par rapport au zéro central dans les trois cas qui viennent d'être envisagés peut être, par exemple:

— l'écart absolu entre la traction mesurée et la traction théorique;

— l'écart entre la traction mesurée et la traction théorique de chaque zone, relativement à la traction totale mesurée;

— le taux de l'action nécessaire pour ramener la traction à la valeur théorique.

Les indications peuvent évidemment être fournies sous forme de caractères numériques.

Dans la description qui précède, la bande D est soulevée et s'inscrit par sa face inférieure sur les rouleaux A, B, C. Il est évidemment possible d'adopter la disposition inverse, consistant à abaisser la bande en l'astreignant à s'inscrire par sa face supérieure sur les rouleaux, les autres éléments de l'installation étant modifiés en conséquence.

**Revendications**

1. Dispositif pour contrôler dans un laminoir travaillant à froid la planéité d'une bande métallique, par mesure des tractions sur des zones différentes de la largeur de la bande au moyen de trois rouleaux de poussée coaxiaux, jointifs ou à peu près jointifs, disposés transversalement à la direction d'avance de la bande, et munis de dispositifs de mesure des efforts exercés par la bande sur chacun desdits rouleaux, caractérisé en ce qu'un rouleau central (B) tourillonne sur un élément d'arbre (21, 31) qui s'étend à travers des rouleaux latéraux (A, C) et dont les extrémités respectives sont, au-delà de ces derniers, montées dans deux supports (22) qui s'appuient chacun, par l'intermédiaire d'un capteur d'effort (6), sur une poutre (7) solidaire du bâti du laminoir, et en ce que les rouleaux latéraux (A, C) sont portés par un élément d'arbre (23, 32) autour duquel ils sont montés à rotation libre, qui traverse les supports (22) du rouleau central, et dont les extrémités respectives sont, au-delà de ces derniers, montées dans deux supports (24) qui s'appuient chacun, par l'intermédiaire d'un capteur d'effort (6), sur la poutre (7) (Fig. 3 à 9).

2. Dispositif suivant la revendication 1, caractérisé en ce que chaque élément d'arbre (21, 23) se compose d'au moins deux pièces cylindro-prismatiques (a, b) ayant en section droite la forme approximative d'un trapèze isocèle dont la grande base (c) est circulaire et dont les côtés (d, e) adjacents à cette grande base, font entre eux un angle de 90°, dont l'une (b) est prolongée à partir de la petite base (f) de sa section en formant des dés (h) espacés le long de l'axe de l'élément et appliqués au contact de la face de l'autre pièce (a) correspondant à la petite base de sa section, les deux pièces (a, b) étant assemblées au moyen de vis (g) à peu près radiales, qui réunissent les dés (h) de l'une des pièces (b) à l'autre pièce (a), en ce que les éléments d'arbre (21, 23) sont disposés en croix l'un par rapport à l'autre, les dés (h) de l'un des éléments d'arbre traversant les intervalles qui séparent les dés de l'autre élément, et en ce que, à l'endroit de chaque support (22, 24) recevant l'extrémité d'un élément d'arbre, l'extrémité de l'autre élément d'arbre est radialement en retrait, par exemple grâce à une rainure périphérique (26, 27), de manière à assurer une portée indépendante pour les éléments d'arbres respectifs (Fig. 3 à 8).

3. Dispositif suivant la revendication 2, caractérisé en ce que chaque rouleau (A, B, C) tourillonne sur l'élément d'arbre correspondant (21, 23) au moyen de roulements (25, 28) qui sont montés chacun sur une portée (29 ou 30) de l'arbre correspondant, dont le diamètre est plus grand que la partie intermédiaire de l'arbre.

4. Dispositif suivant la revendication 1, caractérisé en ce que l'un des éléments d'arbre est constitué par une pièce tubulaire (31) qui supporte à rotation le rouleau central (B) associé à cet élément d'arbre, et qui est traversée intérieurement et coaxialement par une barre (32) constituant l'autre élément d'arbre, sur laquelle est fixé au moins un manchon tubulaire (34) qui est concentrique et extérieur à la pièce tubulaire (31) et qui supporte à rotation le rouleau associé, ou les rouleaux associés (A, C), à l'autre élément d'arbre (32) (Fig. 9).

5. Dispositif pour contrôler dans un laminoir travaillant à froid la planéité d'une bande métallique, par mesure des tractions sur des zones différentes de la largeur de la bande au moyen de trois rouleaux de poussée coaxiaux, jointifs ou à peu près jointifs, disposés transversalement à la direction d'avance de la bande, et munis de dispositifs de mesure des efforts exercés par la bande sur chacun desdits rouleaux, caractérisé en ce que, chacun des rouleaux de poussée (A, B, C) étant porté par un arbre indépendant (46) tourillonnant dans deux paliers (48, 49, 51), les paliers (49, 51) supportant les extrémités adjacentes du rouleau central (B) et du rouleau latéral correspondant (A, C) sont imbriqués l'un dans l'autre pour réduire au minimum l'intervalle séparant les faces terminales (52, 53) des rouleaux (Fig. 11 à 13).

6. Dispositif suivant la revendication 5, caractérisé en ce que chacun des paliers adjacents (49, 51) comporte une monture (149, 151) sur la face interne de laquelle est fixé, sur une fraction de sa hauteur, un roulement associé qui est engagé dans l'extrémité correspondante du rouleau, l'une des montures formant un portique (151) à la partie haute duquel le roulement associé (47) est fixé, tandis que l'autre monture forme un berceau (149) qui rentre à l'intérieur du portique.

7. Dispositif suivant l'une des revendications 1 à 6, caractérisé par un afichage (18) fournissant, pour chaque zone, des indications relatives à un écart éventuel entre les efforts mesurés par les capteurs (6) et les valeurs théoriques.

8. Dispositif suivant l'une des revendications 1 à 6, caractérisé par un affichage (18) fournissant respectivement pour la zone centrale et l'ensemble des deux zones de rive des indications relatives à un écart éventuel entre les efforts mesurés par les capteurs (6) et les valeurs théoriques.

9. Dispositif suivant la revendication 8, caractérisé en ce que l'affichage (18) indique directement le déséquilibre entre la zone centrale et les deux zones de rive.

10. Dispositif suivant l'une des revendications 7 et 8, caractérisé en ce que l'écart éventuel entre les efforts mesurés par les capteurs (6) et les valeurs théoriques est exprimé en valeur relative de la traction totale mesurée.

11. Dispositif suivant les revendications 7 à 10, caractérisé en ce que les indications relatives à un écart éventuel entre les efforts mesurés et les valeurs théoriques sont fournies sous forme de caractères numériques.

## Claims

1. A device for controlling in a cold-rolling mill the flatness of a metal sheet by measurement of the tensions in different regions of the width of the sheet by means of three coaxial thrust rollers which are adjoining or substantially adjoining and are disposed transversely of the direction of travel of the sheet and including force measuring means for measuring the forces exerted by the sheet on each of said rollers characterized in that a central roller B rotates on a shaft element (21, 23) which extends through two lateral rollers (A, C), the respective end portions of the shaft which extend beyond the lateral rollers being mounted in two supports (22) each of which bears, by means of a force sensor (6) on a girder (7), which is rigid with a frame of the rolling mill, and in that the lateral rollers (A, C) are carried by a second shaft element (23, 32) on which they are rotatably mounted and which extends through the supports (22) of the central roller, the respective end portions of the second shaft which extend beyond the supports (22) being mounted in two supports (24) each of which bears, by means of a force sensor (6) on a girder (7) (Fig. 3 to 9).

2. Device according to claim 1 characterized in that each shaft element (21, 23) includes at least two cylindroprismatic members (a, b) having a cross section the approximate form of an isosceles trapezium of which the large base (c) is circular, and of which the sides (d, e), adjacent to this large base, form an angle of 90° between themselves, one of the members (b) being extended beyond the small base (f) of its cross section forming blocks (h) spaced along the axis of the element and are applied against the face of the other member (a) corresponding to the small base of its cross section, the two members (a, b) being assembled by means of substantially radial screws which connect the blocks (h) of one of the members (b) to the other member (a), and in that the shaft elements (21, 23) are arranged in a cross configuration with respect to each other, the blocks (h) of one of the shaft elements extending through the gaps which separate the blocks of the other shaft element, and in that, in the region of each support (22, 24) receiving the end portion of a shaft element, the end portion of the other shaft element is radially set back, for example due to a peripheral groove (26, 27) so as to assure an independent bearing surface for the respective shaft elements (Fig. 3 to 8).

3. Device according to claim 2 characterized in that each roller (A, B, C) rotates on a corresponding shaft element (21, 23) by means of roller bearings (25, 28) which are each mounted on a bearing surface (29 or 30) of the corresponding shaft, whose diameter is larger than the intermediate part of the shaft.

4. Device according to claim 1 characterized in that one of the shaft elements is formed by a tubular member (31) which rotatably supports the central roller (B) associated with this shaft element, and is transversed internally and coaxially by a bar (32) which constitutes the other shaft element, on which is mounted at least one tubular sleeve (34) which is concentric with and exterior to the tubular member (31) and which rotatably supports the roller or rollers (A, C) associated with the other shaft element (32) (Fig. 9).

5. A device for controlling in a cold-rolling mill the flatness of a metal sheet measurement of the tensions in the different regions of the width of the sheet by means of three coaxial thrust rollers which are adjoining or substantially adjoining and are disposed transversely of the direction of travel of the sheet and including force measuring means for measuring the forces exerted by the sheet on each of said rollers characterized in that each of the thrust rollers (A, B, C) being carried by an independent shaft (46) rotates on two bearings (48, 49, 51), the bearings (49, 51) which support the adjacent end portions of the central roller (B) and of the corresponding lateral roller (A, C) being in an imbricated relation to each other so as to reduce to a minimum the space between the end faces (52, 53) of the rollers (Fig. 11 to 13).

6. Device according to claim 5 characterized in that each of the adjacent bearings (49, 51) comprises a mount (149, 151), to the inner face of which is affixed, in a fraction of its height, an associated roller bearing which is engaged with the corresponding end portion of the roller, one of the mounts forming a bridge (151) to which is affixed at its upper part, the associated roller bearing (47), whereas the other mount forms a cradle (149) which is inserted within the bridge.

7. A device according to one of the claims 1 to 6 characterized by a display (18) providing for each region indications relating to a possible difference between the forces measured by the sensors (6) and the theoretical values.

8. Apparatus according to one of the claims 1 to 6 characterized by a display (18) providing respectively for the central region and the two edge regions indications relating to a possible difference between the forces measured by the sensors (6) and the theoretical values.

9. A device according to claim 8 characterized in that the display (18) directly indicates the lack of balance between the central region and the two edge regions.

10. A device according to one of the claims 7 and 8 characterized in that the possible difference between the forces measured by the sensors (6) and the theoretical values is expressed in relative value of the total measured tension.

11. Apparatus according to claims 7 to 10 characterized in that the indications relating to a possible difference between the measured forces and the theoretical values are provided in numerical form.

**Patentansprüche**

1. Vorrichtung zur Überwachung der Planheit eines Metallbandes in einem Kaltwalzwerk durch Messung der Züge auf unterschiedliche Bereiche der Breite des Bandes mittels dreier koaxialer Schubwalzen, die aneinander stoßen oder ungefähr aneinander stoßen, quer zur Laufrichtung des Bandes angeordnet sind und mit Meßvorrichtungen zur Messung der durch das Band auf die einzelnen Walzen ausgeübten Belastungskräfte versehen sind, dadurch gekennzeichnet, daß eine Mittelwalze (B) um ein Wellenelement (21, 31) dreht, das sich durch seitliche Walzen (A, C) erstreckt und dessen Enden jenseits der letzteren in zwei Stützen (22) angebracht sind, von denen sich jede über einen Belastungskraftgeber (6) an einem mit dem Walzwerkrahmen festen Träger (7) abstützt, und daß die seitlichen Walzen (A, C) von einem Wellenelement (23, 32) getragen werden, auf dem sie frei drehbar angebracht sind, das die Stützen (22) der Mittelwalze durchsetzt und dessen Enden jenseits derselben in zwei Stützen (24) angebracht sind, von denen sich jede über einen Belastungskraftgeber (6) an dem Träger (7) abstützt (Fign. 3 bis 9).

2. Vorrichtung nach Anspruch 1, dadurch gekennzeichnet, daß sich jedes Wellenelement (21, 23) aus wenigstens zwei zylindro-prismatischen Teilen (a, b) zusammensetzt, die im Querschnitt ungefähr die Form eines gleichschenkeligen Trapezes haben, dessen große Basis (c) kreisförmig und dessen an die große Basis anschließende Seiten (d, e) zwischen sich einen Winkel von 90° einschliessen, wobei sich das eine Teil (b) an der kleinen Basis (f) seines Querschnitts in Würfeln (h) fortsetzt, die längs der Achse des Elements im Abstand liegen und mit der der kleinen Basis seines Querschnitts entsprechenden Seite des anderen Teils (a) in Berührung gebracht sind, wobei die beiden Teile (a, b) mittels im wesentlichen radialer Schrauben (g) zusammengefügt sind, welche die Würfel (h) des einen der Teile (b) mit dem anderen Teil (a) verbinden, daß die Wellenelemente (21, 23) bezüglich einander in Kreuzform angeordnet sind, wobei die Würfel (h) des einen der Wellenelemente die Zwischenräume durchsetzen, welche die Würfel des anderen Elements trennen, und daß an der Stelle jeder das Ende eines Wellenelements aufnehmenden Stütze (22, 24) das Ende des anderen Wellenelements, beispielsweise durch eine Umfangsnut (26, 27) radial zurückgesetzt ist, so daß eine unabhängige Auflagefläche für die betreffenden Elemente der Wellen sichergestellt ist (Fign. 3 bis 8).

3. Vorrichtung nach Anspruch 2, dadurch gekennzeichnet, daß jede Walze (A, B, C) um das zugehörige Wellenelement (21, 23) mittels Wälzlagern (25, 28) dreht, von denen jedes auf einer Auflagefläche der entsprechenden Welle (29 oder 30) angeordnet ist, deren Durchmesser größer als der dazwischenliegende Teil der Welle ist.

4. Vorrichtung nach Anspruch 1, dadurch gekennzeichnet, daß eines der Wellenelemente durch ein rohrförmiges Teil (31) gebildet ist, welches drehbar die diesem Wellenelement zugeordnete Mittelwalze (B) trägt und innen und koaxial von einem das andere Wellenelement bildenden Stab (32) durchsetzt ist, auf welchem mindestens eine rohrförmigen Manschette (34), welche konzentrisch und außerhalb bezüglich des rohrförmigen Teils (31) verläuft und drehbar die dem anderen Wellenelement (32) zugeordnete Walze bzw. zugeordneten Walzen (A, C) trägt, befestigt ist (Fig. 9).

5. Vorrichtung zur Überwachung der Planheit eines Metallbandes in einem Kaltwalzwerk durch Messung der Züge auf unterschiedliche Bereiche der Breite des Bandes mittels dreier koaxialer Schubwalzen, die aneinander stoßen oder ungefähr aneinander stoßen, quer zur Laufrichtung des Bandes angeordnet sind und mit Meßvorrichtungen zur Messung der durch das Band auf die einzelnen Walzen ausgeübten Belastungskräfte versehen sind, dadurch gekennzeichnet, daß jede der Schubwalzen (A, B, C) von einer eigenen in zwei Lagerstützen (48, 49, 51) drehenden Welle (46) gehalten wird, wobei die die benachbarten Enden der Mittelwalze (B) und der entsprechenden Seitenwalze (A, C) tragenden Lagerstützen (49, 51) ineinander geschachtelt sind, um den zwischen den Endflächen (52, 53) der Walzen liegenden Abstand auf ein Minimum zu verringern (Fign. 11 bis 13).

6. Vorrichtung nach Anspruch 5, dadurch gekennzeichnet, daß jede der benachbarten Lagerstützen (49, 51) ein Gestell (149, 151) aufweist, an dessen Innenfläche über einen Teil seiner Höhe ein zugehöriges Wälzlager, welches in das entsprechende Ende der Walze eingefügt ist, befestigt ist, wobei das eine der Gestelle ein brückenförmiges Teil (151), an dessen hohem Abschnitt das zugehörige Wälzlager (47) befestigt ist, und das andere Gestell eine sich in das brückenförmige Teil einfügende Wiege (149) bildet.

7. Vorrichtung nach einem der Ansprüche 1 bis 6, gekennzeichnet durch eine Anzeigevorrichtung (18), welche für jeden Bereich Anzeigen bezüglich einer gegebenenfalls vorliegenden Abweichung zwischen den durch die Geber (6) gemessenen Belastungskräften und den theoretischen Werten liefert.

8. Vorrichtung nach einem der Ansprüche 1 bis 6, gekennzeichnet durch eine Anzeigevorrichtung (18), welche für den Mittelbereich und die Gesamtheit der beiden Randbereiche Anzeigen bezüglich einer gegebenenfalls vorliegenden Abweichung zwischen den durch die Geber (6) gemessenen Belastungskräften und den theoretischen Werten liefert.

9. Vorrichtung nach Anspruch 8, dadurch gekennzeichnet, daß die Anzeigevorrichtung (18) direkt das Ungleichgewicht zwischen dem Mittelbereich und den beiden Randbereichen anzeigt.

10. Vorrichtung nach einem der Ansprüche 7 und 8, dadurch gekennzeichnet, daß die gegebenenfalls vorliegende Abweichung zwischen den durch die Geber (6) gemessenen Belastungskräften und den theoretischen Werten als Relativwert des gemessenen Gesamtzugs ausgedrückt wird.

11. Vorrichtung nach den Ansprüchen 7 bis 10, dadurch gekennzeichnet, daß die Anzeigen in Besug auf eine gegebenenfalls vorliegende Abweichung zwischen den gemessenen Belastungskräften und den theoretischen Werten in digitaler Form geliefert werden.

0 005 102

## FIG.1

## FIG.2

AFFICHAGE

0 005 102

FIG.3

FIG.4

FIG.5

FIG.6

FIG.7

FIG.8

FIG.9

FIG.10

FIG.11

FIG.12

0 005 102